(19) Europäisches Patentamt
European Patent Office
Office européen des brevets

(11) **EP 2 515 572 A1**

(12) **EUROPEAN PATENT APPLICATION**
published in accordance with Art. 153(4) EPC

(43) Date of publication:
**24.10.2012 Bulletin 2012/43**

(51) Int Cl.:
***H04W 24/02*** (2009.01)

(21) Application number: **10848711.7**

(22) Date of filing: **17.05.2010**

(86) International application number:
**PCT/CN2010/072839**

(87) International publication number:
**WO 2011/120251 (06.10.2011 Gazette 2011/40)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **01.04.2010 CN 201010141529**

(71) Applicant: **ZTE Corporation**
**Shenzhen, Guangdong 518057 (CN)**

(72) Inventor: **WANG, Yongtian**
**Shenzhen**
**Guangdong 518057 (CN)**

(74) Representative: **Kling, Simone**
**Lavoix Munich**
**Bayerstrasse 85a**
**80335 München (DE)**

(54) **BLIND DETECTION APPARATUS AND METHOD**

(57)　The present disclosure discloses a blind detection apparatus, including: a calculation unit configured, according to a preconfigured sub-frame configuration parameter, to respectively calculate addresses in a memory of soft information data required by processing which is carried out by a plurality of sub-channels; and the plurality of sub-channels configured to perform blind detection processing in parallel according to a result obtained by the calculation unit. The present disclosure discloses a blind detection method which includes: respectively calculating the addresses in a memory of soft information data required by processing which is carried out by a plurality of sub-channels according to a preconfigured sub-frame configuration parameter; performing blind detection processing in parallel by the plurality of sub-channels according to a calculation result. According to the above technical schemes of the present disclosure, the physical downlink control channel (PDCCH) blind detection is performed in parallel in a pipeline processing manner by a plurality of channels, the efficiency of UE downlink PDCCH blind detection can be improved and the requirement for real-time performance can be ensured, thus the whole performance of a long term evolution (LTE) terminal system is improved

Fig. 1

```
┌─────────────────────────────┐
│                             │
│     Calculation unit 10     │
│                             │
└─────────────────────────────┘
              │
┌─────────────────────────────┐
│                             │
│  A plurality of blind detection
│  processing sub-channels 20 │
│                             │
└─────────────────────────────┘
```

**Description**

**TECHNICAL FIELD**

The present disclosure relates to a blind detection technology, in particular to a blind detection apparatus and a bind detection method.

**BACKGROUND**

A Physical Downlink Control Channel (PDCCH) in a Long Term Evolution (LTE) system is used for bearing various scheduling information and some control information on uplink and downlink. One PDCCH is transmitted on one or more Control Channel Elements (CCEs), wherein the CCE is a combination of Resource Elements (REs); User Equipment (UE) needs to detect a series of PDCCH candidate sets within each sub-frame; all UEs are required to monitor a common space and a UE specific space. Reference 3GPP TS36.213.9.1.1 regulates the candidate set times that UE needs to monitor in various situations, as shown in Table 1:

Table 1

| Search space type $S_k^{(L)}$ | Aggregation degrees level L | the number of CCEs | the number of PDCCH candidate sets $M^{(L)}$ |
|---|---|---|---|
| UE specific space (UE-specific) | 1 | 6 | 6 |
| | 2 | 12 | 6 |
| | 4 | 8 | 2 |
| | 8 | 16 | 2 |
| Common space (Common) | 4 | 16 | 4 |
| | 8 | 16 | 2 |

It can be seen from Table 1 that one search space is a combination of a series of CCEs, wherein the set size can be 1, 2, 4 or 8 CCEs; the common search space is monitored by all UEs in one cell and only supports two set levels with aggregation degrees of 4 and 8; the UE specific search space supports all set levels, and only part of UEs in one cell need to monitor the UE specific search space. From Table 1 it also can be seen that the number of PDCCH candidate sets is an integral multiple of 2, that is, 2, 4 or 6.

In one sub-frame, when an evolved Node B (eNB) does not know channel quality, a high layer can not determine a PDCCH format; at this moment, UE needs to perform a Downlink Control Information (DCI) blind detection on all search spaces in each aggregation degree; for each PDCCH format, the UE needs to calculate every possible CCE location of DCI and perform a blind detection on all candidate sets.

The blind detection implementation method in the related art is that both eNB and UE use a fixed PDCCH format, that is, the eNB allocates an appointed aggregation degree L during a generation process of PDCCH, the UE performs a DCI detection under the pre-assigned L; however, by the method, the requirement for real-time performance can not be met if the blind detection of all DCI formats is to be realized when the DCI type and the aggregation degree L are increased.

To sum up, there has been a problem in the related art that the blind detection technology has a low efficiency and the real-time performance requirement can not be met.

**SUMMARY**

The present disclosure is disclosed to solve the problem in the related art that the present blind detection technology has a low efficiency and cannot meet the real-time performance requirement; the main object of the present disclosure is to provide a blind detection apparatus and a bind detection method.

According to an embodiment of the present disclosure, a blind detection apparatus includes: a calculation unit configured, according to a preconfigured sub-frame configuration parameter, to respectively calculate addresses in a memory of soft information data required by processing which is carried out by a plurality of sub-channels; and the plurality of sub-channels configured to perform blind detection processing in parallel according to a result obtained by the calculation unit.

Preferably, the calculation unit may be further configured to respectively calculate an address in the memory of soft information data of each candidate set according to the number of candidate sets.

Preferably, each sub-channel may further include: a rate de-matching unit configured to respectively read the soft information data of the each candidate set according to the result obtained by the calculation unit, and respectively perform rate de-matching processing on the read soft information data; a decoding unit configured to perform tail-biting convolution decoding processing on the data processed by the rate de-matching unit; and a descrambling unit configured to perform Cyclical Redundancy Check (CRC) and Radio Network Temporary Identity (RNTI) descrambling processing on the data processed by the decoding unit, and store a correct descrambling processing result into a backward-stage memory.

Preferably, the descrambling unit performs the CRC and RNTI descrambling processing, and may be further configured to: perform local CRC on a non-CRC part of the data processed by the decoding unit, perform an exclusive OR (XOR) operation on a checking result and a corresponding RNTI value, comparing an operation result with a CRC bit in the data processed by the decoding unit and store corresponding downlink control information when the operation result is consistent with the CRC bit.

Preferably, the apparatus may further include: a first-in first-out (FIFO) unit arranged between the rate de-matching unit and the decoding unit.

Preferably, the sub-frame configuration parameter may include at least one of the following: band width, a transmission mode, a frame structure type, total length of soft information, an RNTI value, a search starting location of a UE specific space under each aggregation degree, type of to-be-detected downlink control information, and a search priority configuration parameter.

Preferably, the search priority configuration parameter may include at least one of the following: space search priority, common space aggregation degree search priority, UE specific space aggregation degree search priority and default search priority.

According to an embodiment of the present disclosure, a blind detection method includes: respectively calculating addresses in a memory of soft information data required by processing which is carried out by a plurality of sub-channels according to a preconfigured sub-frame configuration parameter;

performing blind detection processing in parallel by the plurality of sub-channels according to a calculation result.

Preferably, the performing blind detection processing in parallel by the plurality of sub-channels according to a calculation result may further include: respectively reading soft information data of each candidate set according to the calculation result and respectively performing rate de-matching processing on the read soft information data by the plurality of sub-channels;

respectively performing tail-biting convolution decoding processing on the data processed by the rate de-matching processing by the plurality of sub-channels;

respectively performing Cyclical Redundancy Check (CRC) and Radio Network Temporary Identity (RNTI) descrambling processing on the data processed by the decoding processing, and storing downlink control information obtained by correct descrambling processing into a backward-stage memory by the plurality of sub-channels.

Preferably, the sub-frame configuration parameter may include at least one of the following: band width, a transmission mode, a frame structure type, total length of soft information, an RNTI value, a search starting location of a UE specific space under each aggregation degree, type of to-be-detected downlink control information, and a search priority configuration parameter.

Compared with the related art, according to the above technical schemes of the present disclosure, the efficiency of UE downlink PDCCH blind detection can be improved by adopting a plurality of channels to perform PDCCH blind detection in parallel in a pipeline processing manner, and the requirement for real-time performance is ensured, thus the whole performance of an LTE terminal system is improved.

**BRIEF DESCRIPTION OF THE DRAWINGS**

Fig. 1 shows a block diagram of a blind detection apparatus according to an embodiment of the present disclosure;

Fig. 2 shows a control processing flowchart of common space and UE specific space search priority according to an embodiment of the present disclosure;

Fig. 3 shows a control processing flowchart of search priority under two aggregation degrees (L=4 and L=8) in a common search space according to an embodiment of the present disclosure;

Fig. 4 shows a control processing flowchart of search priority under four aggregation degrees (L=1, 2, 3, 4) in a UE specific space according to an embodiment of the present disclosure

Fig. 5 shows a processing flowchart of soft information address calculation and soft information data reading according to an embodiment of the present disclosure;

Fig. 6 shows a block diagram of a preferred structure of the blind detection apparatus according to an embodiment of the present disclosure;

Fig. 7 shows a flowchart of CRC and RNTI descrambling processing according to an embodiment of the present disclosure;

Fig. 8 shows a flowchart of a blind detection method according to an embodiment of the present disclosure; and

Fig. 9 shows a flowchart of a preferred processing scheme of the blind detection method according to an embodiment of the present disclosure.

## DETAILED DESCRIPTION

The present disclosure allocates a special state for DCI detection under each aggregation degree to control the reading of PDCCH soft information data by applying multi-channel (more than two channels) parallel processing and flexibly configuring required parameters, performs corresponding scheduling of each state according to detection priority and thus realizes blind detection of all DCI with search priority controllable.

For a better understanding of the purpose, the technical scheme and the advantages of the present disclosure, the present disclosure is further illustrated below in detail in conjunction with accompanying drawings and specific embodiments.

According to an embodiment of the present disclosure, a blind detection apparatus is provided.

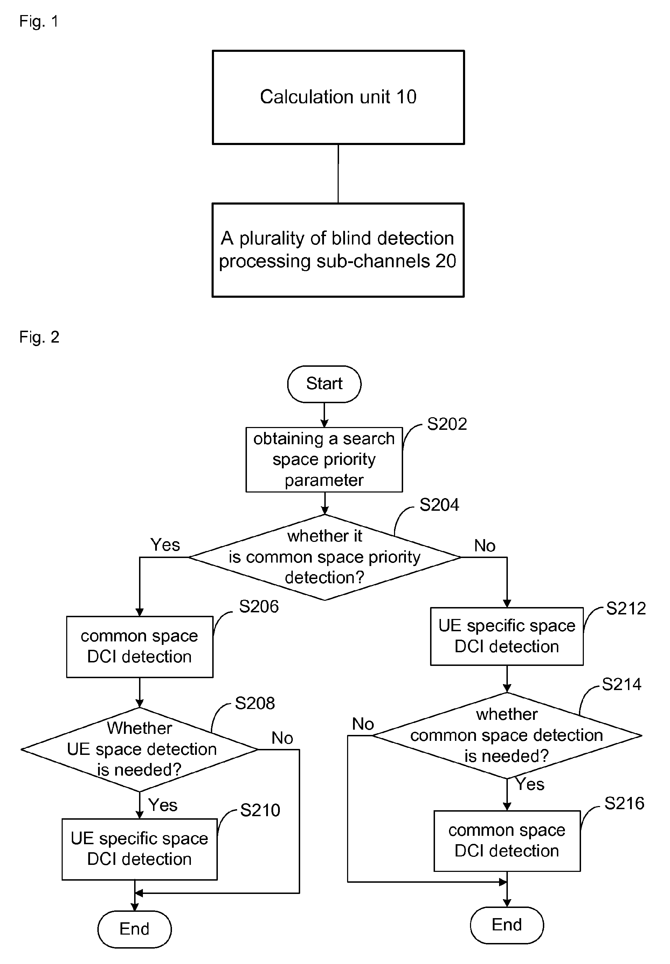

Fig. 1 shows a block diagram of a blind detection apparatus according to an embodiment of the present disclosure; as shown in Fig. 1, the apparatus comprises: a calculation unit 10 and a plurality of blind detection processing sub-channels 20.

The calculation unit 10 is configured, according to a preconfigured sub-frame configuration parameter, to respectively calculate addresses in a memory of soft information data required by the processing which is carried out by the plurality of blind detection processing sub-channels, wherein the sub-frame configuration parameter includes at least one of the following: band width, a transmission mode, a frame structure type (for example, Frequency Division Duplex (FDD) or Time Division Duplex (TDD)), total length of soft information, an RNTI value, a search starting location of a UE specific space in each aggregation degree, type of to-be-detected DCI, and a search priority configuration parameter.

Performing corresponding scheduling of each state according to detection priority can realize blind detection of all DCI with search priority controllable; the specific process of control processing according to a search priority configuration parameter is illustrated in detail with reference to Fig. 2 to Fig. 4.

The search priority configuration parameter includes space search priority which includes common space priority detection and UE specific space priority detection. Referring to Fig. 2, Fig. 2 shows a control processing flowchart of common space and UE specific space search priority according to an embodiment of the present disclosure; as shown in Fig. 2, the flow comprises:

step S202: obtaining a search space priority parameter;

step S204: judging whether it is common space priority detection, if so, executing step S206, otherwise, executing step S212;

step S206: performing common space DCI detection;

step S208: judging whether UE space detection is needed, if so, executing step S210, otherwise, ending the flow;

step S210: performing UE specific space DCI detection, and ending the flow;

step S212: performing UE specific space DCI detection;

step S214: judging whether common space detection is needed, if so, executing step S216, otherwise, ending the flow; and

step S216: performing common space DCI detection, and ending the flow.

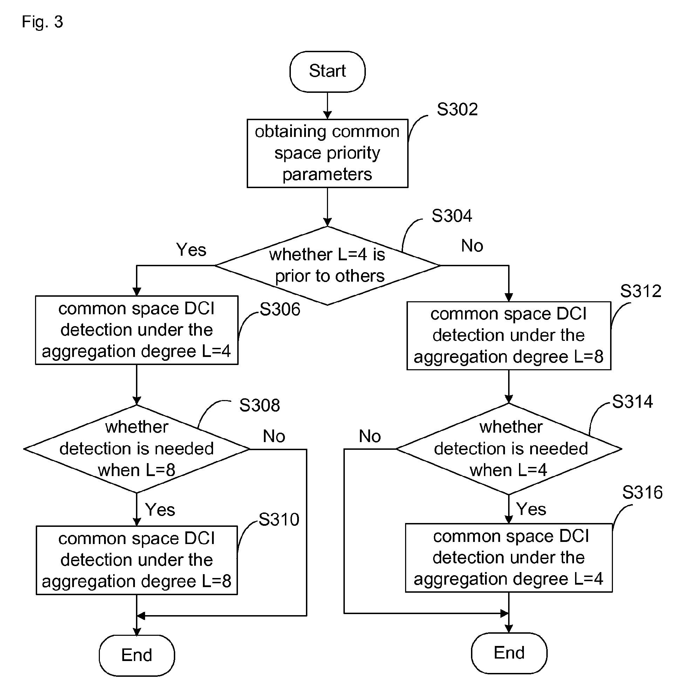

The search priority configuration parameter also includes common space aggregation degree search priority; referring to Fig. 3, Fig. 3 shows a control processing flowchart of search priority under two aggregation degrees (L=4 and L=8) in a common search space according to an embodiment of the present disclosure; as shown in Fig. 3, the flow comprises the steps of:

step S302: obtaining a common space priority parameter;

step S304: judging whether L=4 is prior to others, if so, executing step S306, otherwise, executing step S312;

step S306: performing common space DCI detection under the aggregation degree L=4;

step S308: judging whether detection is needed when L=8, if so, executing step S310, otherwise, ending the flow;

step S310: performing common space DCI detection under the aggregation degree L=8, ending the flow;

step S312: performing common space DCI detection under the aggregation degree L=8;

step S314: judging whether detection is needed when L=4, if so, executing step S316, otherwise, ending the flow;

step S316: performing common space DCI detection under the aggregation degree L=4, ending the flow;

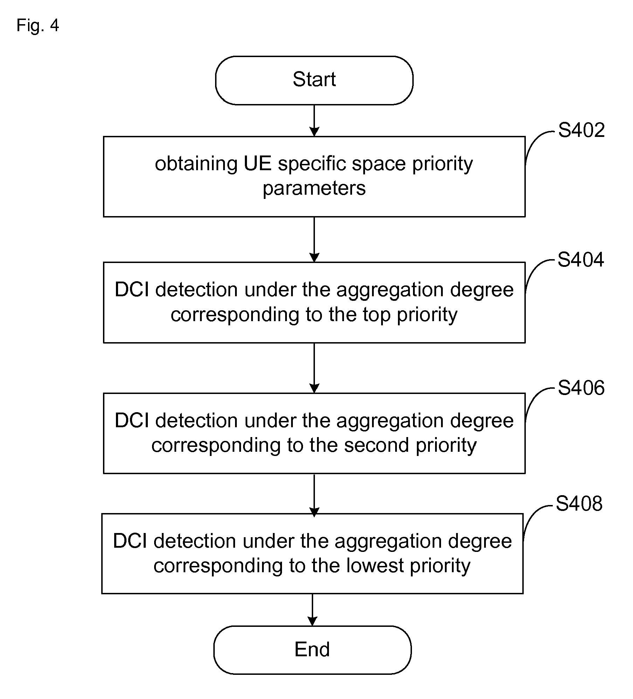

The search priority configuration parameter also includes UE specific space aggregation degree search priority; referring to Fig. 4, Fig. 4 shows a control processing flowchart of search priority under four aggregation degrees (L=1, 2, 3, 4) in a UE specific space according to an embodiment of the present disclosure; as shown in Fig. 4, the flow comprises the steps of:

step S402: obtaining a UE specific space priority parameter;

step S404 to step S408: first performing DCI detection under an aggregation degree corresponding to the top priority, then performing DCI detection under an aggregation degree corresponding to the second priority; and then performing DCI detection under a corresponding aggregation degree according to the priority sequence; finally performing DCI detection under an aggregation degree corresponding to the lowest priority.

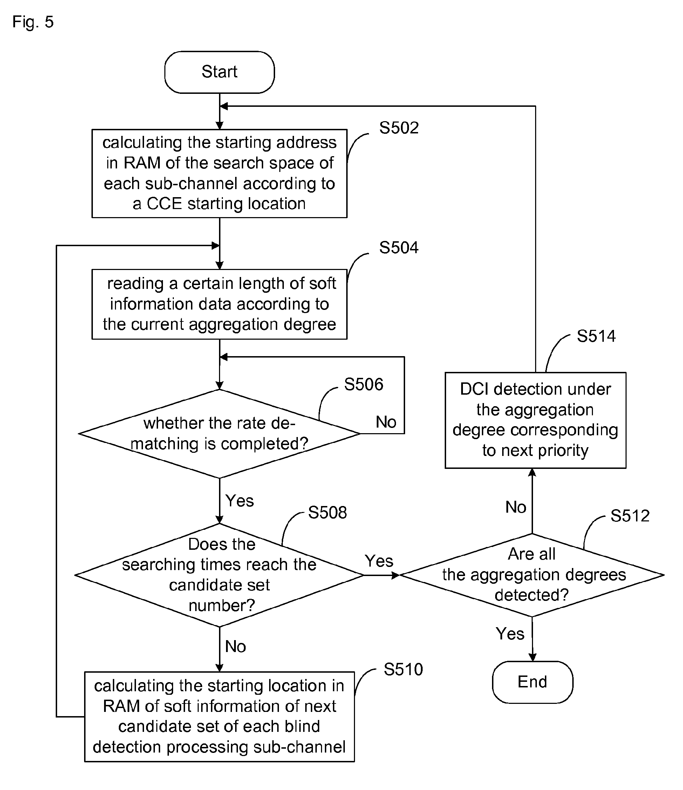

Besides, the search priority configuration parameter may also include default search priority.
The calculation unit 10, according to a preconfigured sub-frame configuration parameter, respectively calculates addresses in a memory of soft information data required by the processing which is carried out by the plurality of sub-channels; Fig. 5 shows the processing that the calculation unit 10 performs soft information address calculation and soft information data reading, as shown in Fig. 5, the flow comprises the steps of:

step S502: calculating the starting address in the RAM of the search space of each blind detection processing sub-channel according to a CCE starting location;

step S504: reading a certain length of soft information data according to the current aggregation degree;

step S506: judging whether rate de-matching is completed, if not, executing step S506 circularly, otherwise, executing step S508;

step S508: judging whether the searching times reach the number of candidate sets, if not, executing step S51 0, otherwise, executing step S512;

step S510: calculating the starting location in the RAM of soft information of next candidate set of each blind detection processing sub-channel, and continuing to execute step S504;

step S512: judging whether all the aggregation degrees are detected, if not, executing step S514, otherwise, ending the flow; and

step S514: performing DCI detection under an aggregation degree corresponding to next priority, and executing step S502.

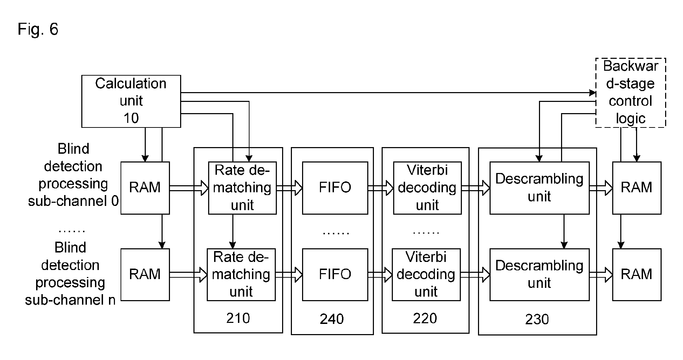

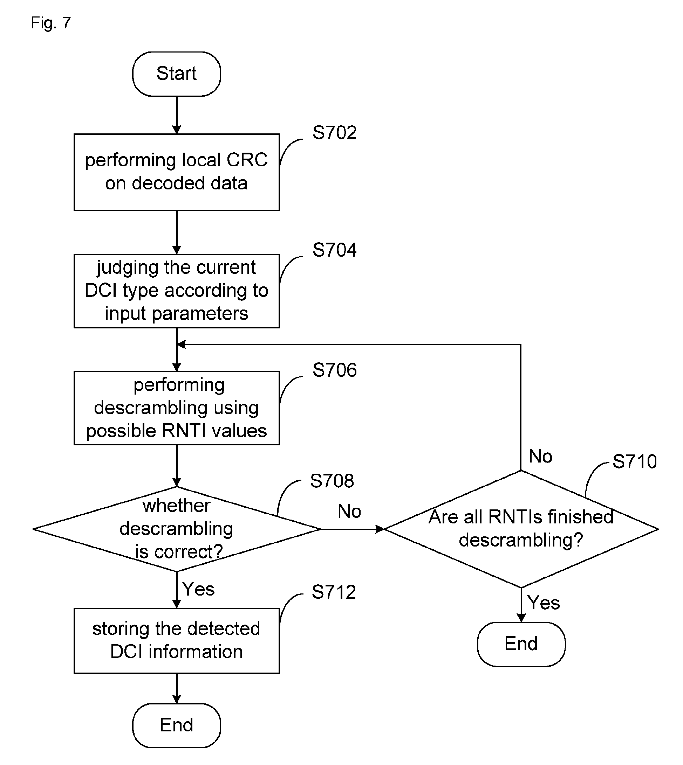

The plurality of blind detection processing sub-channels 20 are configured to perform blind detection processing in parallel according to a result obtained by the calculation unit 10. Fig. 6 shows a block diagram of a preferred structure of the blind detection apparatus according to an embodiment of the present disclosure; as shown in Fig. 6, based on the structure as shown in Fig. 1, each blind detection processing sub-channel (blind detection processing sub-channels 0 to n) includes the following units respectively: a rate de-matching unit 210, a decoding unit 220 and a descrambling unit 230; wherein

the rate de-matching unit 210 is configured to respectively read soft information data of each candidate set according to the result obtained by the calculation unit 10, and respectively perform rate de-matching processing on the read soft information data; the decoding unit 220 (a Viterbi decoding unit as shown in Fig. 6) is configured to perform tail-biting convolution decoding processing on the data processed by the rate de-matching unit 210; the descrambling unit 230 (or called CRC, RNTI descrambling unit) is configured to perform CRC and RNTI descrambling processing on the data processed by the decoding unit 220, and store downlink control information obtained by correct descrambling processing into a backward-stage memory (RAM); the descrambling unit 230 further performs local CRC on the non-CRC part of the data processed by the decoding unit, performs an exclusive OR (XOR) operation on a checking result and a corresponding RNTI value, compares the operation result with a CRC bit in the data processed by the decoding unit, and stores corresponding downlink control information when the operation result is consistent with the CRC bit. Specifically, please refer to Fig. 7 for the work flow of the descrambling unit 230. Fig. 7 shows a flowchart of CRC and RNTI descrambling processing according to an embodiment of the present disclosure; as shown in Fig. 7, the flow comprises the steps of:

step S702: performing local CRC on the decoded data;

step S704: judging the current DCI type according to an input parameter;

step S706: performing descrambling using possible RNTI values;

step S708: judging whether descrambling is correct, if so, executing step S712, otherwise, executing step S71 0;

step S710: judging whether all RNTIs are finished descrambling, if so, ending the flow, otherwise, continuing to executing step S706;

step S712: storing detected DCI information, and ending the flow.

As shown in Fig. 6, a first-in first-out (FIFO) unit 240 is further arranged between the rate de-matching unit 210 and the decoding unit 220; the FIFO unit 240 is configured to perform rate control so as to realize the pipeline processing of the whole link.

Besides, a backward-stage logic unit is further configured in Fig. 6, to control the storage of an output result of the descrambling unit 230 into a backward-stage memory (RAM).

According to an embodiment of the present disclosure, the number of the blind detection processing sub-channels can be set in accordance with actual requirement, e.g., 2, 3 or 4, etc.; the embodiments of the present disclosure are illustrated hereinafter in detail by taking two blind detection processing sub-channels as example.

Embodiment 1:

in LTE UE FDD, band width is 20MHz; the type of to-be-detected DCI includes DCI0 and DCI1A; the total number of CCEs is 64, the starting CCE of the search space is 1 when UE specific space L=1, the starting CCE of the search space is 2 when L=2, the starting CCE of the search space is 4 when L=4, the starting CCE of the search space is 8 when L=8; no search priority is set (i.e. operating according to a default priority); two blind detection processing sub-channels are adopted to perform parallel processing.

Step 1: a PDCCH soft information address calculation unit calculates the starting location in the RAM of soft information data of each blind detection processing sub-channel; search priority is judged first, if no priority is set, then according to a default search order, detection is performed in Common space first, then in UE specific space. In the Common space, the detection in the case of L=4 is performed first, then the detection in the case of L=8 is performed;

in the UE specific space, detection is performed according to a default order of L=1, 2, 4, 8. In the Common space, when L=4, during the first search, the CCE search starting location of the blind detection processing sub-channel 0 is 0 while the CCE search starting location of the blind detection processing sub-channel 1 is 4; during the second search, the CCE search starting location of the blind detection processing sub-channel 0 is 8 while the CCE search starting location of the blind detection processing sub-channel 1 is 12; when L=8, the two blind detection processing sub-channels need to perform searching for only one time respectively, the CCE search starting location of the blind detection processing sub-channel 0 is 0 while the CCE search starting location of the blind detection processing sub-channel 1 is 8. In the UE specific space, when L=1 and 2, the candidate set times are 6, the two blind detection processing sub-channels process in parallel and need to process for three times respectively; when L=4 and 8, the two blind detection processing sub-channels only need to process for one time. According to a protocol, if a CCE location crosses the boundary, it is necessary to turn back to the zero CCE location to perform detection. When soft information data is read, the original bit length of DCI is not taken into account; the soft information data length needed to be read under each aggregation degree is as shown in Table 2; the whole flow of soft information address calculation and soft information data reading is shown in Fig. 5; during the process of reading data from the RAM, it is needed to judge whether boundary cross occurs, once the boundary is crossed, the reading address of the RAM has to be returned to the soft information initial address; and the data read from the RAM is sent to the rate de-matching unit.

Table 2

| PDCCH format | The number of CCEs | The number of RE groups | The number of PDCCH bits |
|---|---|---|---|
| 0 | 1 | 9 | 72 |
| 1 | 2 | 18 | 144 |
| 2 | 4 | 36 | 288 |
| 3 | 8 | 72 | 576 |

Step 2: the rate de-matching unit receives the soft information read from the RAM, performs rate de-matching in conjunction with corresponding parameters, finally obtains three-path output data and then temporarily stores the three-path output data into the FIFO; when the rate de-matching is completed, a Viterbi decoding unit is notified that data is ready, and the PDCCH soft information address calculation unit is notified that data of a next candidate set can be read after the data in the FIFO is read.

Step 3: the Viterbi decoding unit reads data of a corresponding length from the FIFO to decode, and sends the decoded result to the CRC and RNTI descrambling unit.

Step 4: the CRC and RNTI descrambling unit receives the data output from the Viterbi decoding unit, performs local CRC on the non-CRC part of the output data with reference to the processing flow shown in Fig. 7, then performs an XOR operation on the checking result and possible RNTI values, compares the operation result with a CRC bit in the decoding result, and records the corresponding DCI information when the operation result is consistent with the CRC bit. The RNTI descrambling mode of each DCI can be found from Table 3; it can be known from Table 3 that DCI0 and DCI1A have five possible descrambling modes in the common space, that is, SI-RNTI, P-RNTI, RA-RNTI, C-RNTI, and T-C-RNTI, wherein the five RNTI values are needed to be traversed when descrambling is performed; in the UE specific space, DCI0 and DCI1A have two RNTI descrambling modes, that is, C-RNTI and T-C-RNTI, wherein just the two RNTI values are traversed when descrambling is performed. The DCI information correctly detected is sent to the back stage RAM to be stored temporarily. The detection flow of DCI0 and DCI1A is completed here.

Table 3

| | Common space | | UE specific space | | | |
|---|---|---|---|---|---|---|
| | DCI0/1A/3/3A | DCI1C | DCI0/1A | DCI1 | DCI2 | DCI2A |
| Mode 1 | SI-RNTI,P-RNTI,RA-RNTI, C-RNTI,T-C-RNTI, TPC-PUCCH-RNTI, TPC-PUSCH-RNTI | SI-RNTI, P-RNTI, RA-RNT I | C-RNTI, T-C-RNT I | C-RNTI, T-C-RN TI | | |

(continued)

| | Common space | | UE specific space | | | |
|---|---|---|---|---|---|---|
| | DCI0/1A/3/3A | DCI1C | DCI0/1A | DCI1 | DCI2 | DCI2A |
| Mode 2 | SI-RNTI,P-RNTI,RA-RNTI, C-RNTI,T-C-RNTI, TPC-PUCCH-RNTI, TPC-PUSCH-RNTI | SI-RNTI, P-RNTI, RA-RNT I | C-RNTI, T-C-RNT I | C-RNTI, T-C-RN TI | | |
| Mode 3 | SI-RNTI,P-RNTI,RA-RNTI, C-RNTI,T-C-RNTI, TPC-PUCCH-RNTI, TPC-PUSCH-RNTI | SI-RNTI, P-RNTI, RA-RNT I | C-RNTI, T-C-RNT I | T-C-RN TI | | C-RNTI |
| Mode 4 | SI-RNTI,P-RNTI,RA-RNTI, C-RNTI,T-C-RNTI, TPC-PUCCH-RNTI, TPC-PUSCH-RNTI | SI-RNTI, P-RNTI, RA-RNT I | C-RNTI, T-C-RNT I | T-C-RN TI | C-RNTI | |
| Mode 7 | SI-RNTI,P-RNTI,RA-RNTI, C-RNTI,T-C-RNTI, TPC-PUCCH-RNTI, TPC-PUSCH-RNTI | SI-RNTI, P-RNTI, RA-RNT I | C-RNTI, T-C-RNT I | C-RNTI, T-C-RN TI | | |

Embodiment 2:

in LTE UE FDD, band width is 20MHz; the type of DCI to be detected includes DCI0 and DCI1A; the total number of CCEs is 64, the starting CCE of the search space is 1 when UE specific space L=1, the starting CCE of the search space is 2 when L=2, the starting CCE of the search space is 4 when L=4, the starting CCE of the search space is 8 when L=8; the priority is set that the UE specific space is prior to others, in the UE specific space, the priority order of each aggregation degree is that L=4, 8, 1, 2 in turn, that is, the search is performed first under the aggregation degree which is 4, then, the search is performed under the aggregation degree which is 8, 1, 2 sequentially; in the common space, detection is performed according to default priority, two blind detection processing sub-channels are adopted to perform parallel processing.

Step 1: the PDCCH soft information address calculation unit calculates the starting location in the RAM of soft information data of each blind detection processing sub-channel; referring to Fig. 2, search priority is judged first; detection is performed first in the UE specific space and then in the common space. In the UE specific space, search priority is judged with reference to Fig. 4, detection is performed first under the aggregation degree which is 4; when L=4, the number of candidate sets is 2, therefore, the two blind detection processing sub-channels only need to process for one time; the CCE starting location is 4, then the starting address offset value of the soft information corresponding to the blind detection processing sub-channel 0 is 4x72, that is, 288; the starting address offset value of the soft information corresponding to the blind detection processing sub-channel 1 is (4+4)x72, that is, 576; after the respective starting addresses of the two blind detection processing sub-channels are calculated, the soft information of four CCEs are read from corresponding RAM, that is, 288 soft information data, and then is sent to the rate de-matching modules of respective channels. When reading data from the RAM, it is judged in real time whether an RAM address crosses the boundary, if the RAM address crosses the boundary, it is necessary to turn back to the zero address to read data. After rate de-matching is completed, the detection in the case of L=8 is performed subsequently, and the address calculation process above is repeated; in the case that L=1 and 2, each blind detection processing sub-channel needs to process for three times respectively; after the UE specific space is completely detected, detection is performed in the common space according to default priority. When soft information data is read, the original bit length of DCI is not taken into account; the soft information data length needed to be read under each aggregation degree is as shown in Table 2; the whole flow of soft information address calculation and soft information data reading is shown in Fig. 5; during the process of reading data from RAM, it is needed to judge whether boundary cross occurs, once the boundary is crossed, the reading address of the RAM has to be returned to the soft information initial address; and the data read from the RAM is sent to the rate de-matching unit.

Step 2: the rate de-matching unit receives soft information read from the RAM, performs rate de-matching in conjunction with corresponding parameters, finally obtains three-path output data and then temporarily stores the three-path output data into the FIFO; when rate de-matching is completed, a Viterbi decoding unit is notified that data is ready, and the PDCCH soft information address calculation unit is notified that a next candidate set data can be read after the data in the FIFO is read.

Step 3: the Viterbi decoding unit reads data of a corresponding length from the FIFO to decode, and sends the decoded result to the CRC and RNTI descrambling unit.

Step 4: the CRC and RNTI descrambling unit receives the data output from the Viterbi decoding unit, performs local CRC on the non-CRC part of the output data with reference to the processing flow shown in Fig. 7, then performs an XOR operation on the checking result and possible RNTI values, compares the operation result with a CRC bit in the decoding result, and records the corresponding DCI information when the operation result is consistent with the CRC bit. The RNTI descrambling mode of each DCI can be found from Table 3; it can be known from Table 3 that DCI0 and DCIA have two RNTI descrambling modes, that is, C-RNTI and T-C-RNTI, wherein just the two RNTI values are traversed when descrambling is performed; the DCI0 and DCIA have five possible descrambling modes in the common space, that is, SI-RNTI, P-RNTI, RA-RNTI, C-RNTI, and T-C-RNTI, wherein the five RNTI values are needed to be traversed when descrambling is performed; once certain DCI is detected correctly, a forward stage PDCCH soft information address calculation unit is notified to give up the data reading operation performed currently and switch to the reading operation of other DCI soft information data to be detected. The DCI information correctly detected is sent to a back stage RAM to be stored temporarily. The detection flow of DCI0 and DCI1A with priority controllable is completed here.

Embodiment 3:

in LTE UE FDD, band width is 20MHz; the type of DCI to be detected includes DCI2A; the total number of CCEs is 64; the starting CCE of the search space is 4 when UE specific space L=4, moreover, only the detection in the case of L=4 is performed by priority control; two blind detection processing sub-channels are adopted to perform parallel processing.

Step 1: the PDCCH soft information address calculation unit calculates the starting location in RAM of soft information data of each blind detection processing sub-channel; search priority is judged first; only the detection in the case of L=4 is performed in the UE specific space; when L=4, the number of candidate sets is equal to 2, therefore, the two blind detection processing sub-channels only need to process for one time; the CCE starting location is 4, accordingly, the starting address offset value of the soft information corresponding to the blind detection processing sub-channel 0 is 4x72, that is, 288; the starting address offset value of the soft information corresponding to the blind detection processing sub-channel 1 is (4+4)x72, that is, 576; after the respective starting address of the two blind detection processing sub-channels are calculated, the soft information of four CCEs are read from corresponding RAM, that is, 288 soft information data, and then is sent to the rate de-matching modules of respective channels; when reading data from the RAM, it is judged in real time whether an RAM address crosses boundary, if the RAM address crosses the boundary, it is needed to turn back to the zero address to read data. The whole flow of soft information address calculation and soft information data reading is shown in Fig. 5; during the process of reading data from the RAM, it is needed to judge whether boundary cross occurs, once the boundary is crossed, the reading address of the RAM has to be returned to the soft information initial address; and the data read from the RAM is sent to the rate de-matching unit.

Step 2: the rate de-matching unit receives soft information read from the RAM, performs rate de-matching in conjunction with corresponding parameters, finally obtains three-path output data and then temporarily stores the three-path output data into the FIFO; when rate de-matching is completed, a Viterbi decoding unit is notified that data is ready, and the PDCCH soft information address calculation unit is notified that data of a next candidate set can be read after the data in the FIFO is read.

Step 3: the Viterbi decoding unit reads data of a corresponding length from the FIFO to decode, and sends the decoded result to the CRC and RNTI descrambling unit.

Step 4: the CRC and RNTI descrambling unit receives the data output from the Viterbi decoding unit, performs local CRC on the non-CRC part of the output data with reference to the process flow shown in Fig. 7, then performs an XOR operation on the checking result and possible RNTI values, compares the operation result with a CRC bit in the decoding result, and records the corresponding DCI information when the operation result is consistent with the CRC bit. The RNTI descrambling mode of each DCI can be found from Table 3; it can be known from Table 3 that DCI2A has only one RNTI descrambling mode, that is, C-RNTI, wherein just this RNTI value is traversed when descrambling is performed; the DCI information correctly detected is sent to a back stage RAM to be stored temporarily. The detection flow of DCI2A is completed here.

The embodiments above are illustrated by taking two blind detection processing sub-channels as an example; the present disclosure is not limited to the above, and also can set 3, 4 or more blind detection processing sub-channels according to actual requirements, the specific processes of which are similar to that of two blind detection processing sub-channels, no further description is needed here.

According to the above embodiments of the present disclosure, the PDCCH blind detection with multi-channel parallel processing greatly shortens the process time is reduced greatly by adopting a plurality of channels to perform PDCCH blind detection in parallel, and thus the requirement for real-time performance is guaranteed.

According to an embodiment of the present disclosure, a blind detection method is further provided.

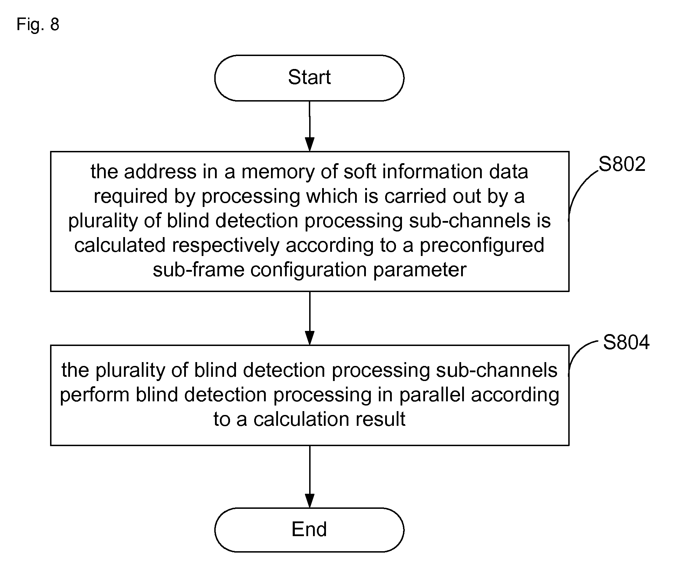

Fig. 8 shows a flowchart of a blind detection method according to an embodiment of the present disclosure; as shown in Fig. 8, the flow comprises the steps:

step S802: respectively calculating addresses in a memory of soft information data required to be processed by a plurality of sub-channels according to a preconfigured sub-frame configuration parameter; wherein the sub-frame configuration parameter includes at least one of the following: band width, a transmission mode, a frame structure type, total length of soft information, an RNTI value, a search starting location of a UE specific space under each aggregation degree, the type of to-be-detected downlink control information and a search priority configuration parameter; and

step S804: performing blind detection processing in parallel by the plurality of blind detection processing sub-channels according to a calculation result.

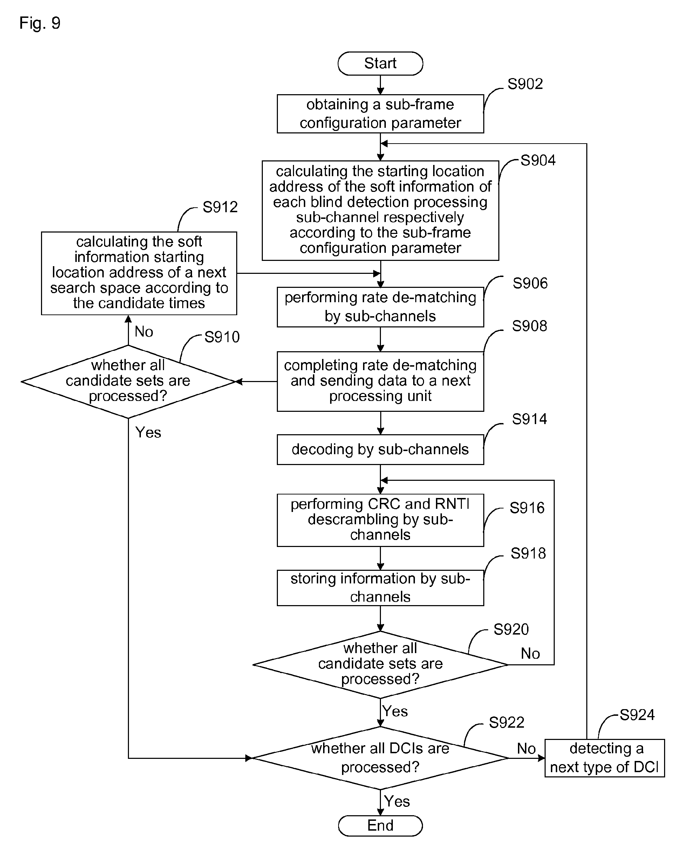

The flow as shown in Fig. 8 is further illustrated below in conjunction with Fig. 9; Fig. 9 shows a flowchart of a preferred process scheme of the blind detection method according to an embodiment of the present disclosure; as shown in Fig. 9, the flow comprises the steps of:

step S902: obtaining a sub-frame configuration parameter;

step S904: calculating the starting location address of each blind detection processing sub-channel respectively according to the sub-frame configuration parameter;

step S906: respectively performing rate de-matching by each blind detection processing sub-channel;

step S908: completing rate de-matching and sending data to a next processing unit;

step S910: judging whether all candidate sets finish the rate de-matching, if not, executing step S91 0, otherwise, executing step S922;

step S912: calculating the soft information starting location address of a next search space according to the candidate times, and continuing to execute step S906;

step S914: respectively performing tail-biting convolution decoding processing by each blind detection processing sub-channel, wherein step S914 and step S910 are processed in parallel, there is no sequence when they are executed;

step S916: respectively performing CRC and RNTI descrambling processing by each blind detection processing sub-channel;

step S918: respectively performing DCI information storage processing by each blind detection processing sub-channel;

step S920: judging whether all candidate sets are processed, if not, executing step S916, otherwise, executing step S922;

step S922: judging whether all DCIs are processed, if so, ending the flow, otherwise, continuing to execute step S924; and

step S924: performing detection on a next type of DCI and executing step S90.

To sum up, according to the above technical schemes of the present disclosure, the PDCCH blind detection is performed in parallel in a pipeline processing manner by a plurality of channels, thus the efficiency of UE downlink PDCCH blind detection can be improved, the requirement for real-time performance can be ensured, and the whole performance of an LTE terminal system can be improved.

The above are only the preferred embodiments of the present disclosure and not intended to limit the present disclosure. For those skilled in the art, various modifications and changes can be made to the present disclosure. Any modification, equivalent substitute and improvement within the spirit and principle of the present disclosure are deemed to be included within the scope of the present disclosure.

## Claims

1. A blind detection apparatus, comprising a calculation unit and more than two blind detection processing sub-channels; wherein

   the calculation unit is configured, according to a preconfigured sub-frame configuration parameter, to respectively calculate addresses in a memory of soft information data required by processing which is carried out by more than two blind detection processing sub-channels;
   the more than two blind detection processing sub-channels are configured to perform blind detection processing in parallel according to a result obtained by the calculation unit.

2. The apparatus according to claim 1, wherein the calculation unit is further configured to respectively calculate an address in the memory of soft information data of each candidate set according to the number of candidate sets.

3. The apparatus according to claim 2, wherein the blind detection processing sub-channel further comprises a rate de-matching unit, a decoding unit and a descrambling unit; wherein

   the rate de-matching unit is configured to respectively read the soft information data of the each candidate set according to the result obtained by the calculation unit, and respectively perform rate de-matching processing on the read soft information data;
   the decoding unit is configured to perform tail-biting convolution decoding processing on the data processed by the rate de-matching unit; and
   the descrambling unit is configured to perform Cyclical Redundancy Check (CRC) and Radio Network Temporary Identity (RNTI) descrambling processing on the data processed by the decoding unit, and store a correct descrambling processing result into a backward-stage memory.

4. The apparatus according to claim 3, wherein the descrambling unit further performs local CRC on a non-CRC part of the data processed by the decoding unit, performs an exclusive OR operation on a checking result and a corresponding RNTI value, compares an operation result with a CRC bit in the data processed by the decoding unit, and stores corresponding downlink control information when the operation result is consistent with the CRC bit.

5. The apparatus according to claim 3, further comprising:

   a first-in first-out (FIFO) unit arranged between the rate de-matching unit and the decoding unit, and configured to realize pipeline control.

6. The apparatus according to any one of claims 1 to 5, wherein the sub-frame configuration parameter comprises at least one of the following: band width, a transmission mode, a frame structure type, a sub-frame uplink/downlink configuration, total length of soft information, an RNTI value, a search starting location of a User Equipment (UE) specific space under each aggregation degree, type of to-be-detected downlink control information, and a search priority configuration parameter.

7. The apparatus according to claim 6, wherein the search priority configuration parameter comprises at least one of the following:

space search priority, common space aggregation degree search priority, UE specific space aggregation degree search priority and default search priority.

8. A blind detection method, comprising:

respectively calculating addresses in a memory of soft information data required by processing which is carried out by more than two blind detection sub-channels according to a preconfigured sub-frame configuration parameter;
performing blind detection processing in parallel by the more than two blind detection sub-channels according to a calculation result.

9. The method according to claim 8, wherein the performing blind detection processing in parallel by the more than two blind detection sub-channels according to a calculation result comprises:

respectively reading soft information data of each candidate set according to the calculation result and respectively performing rate de-matching processing on the read soft information data;
respectively performing tail-biting convolution decoding processing on the data processed by the rate de-matching processing;
respectively performing Cyclical Redundancy Check (CRC) and Radio Network Temporary Identity (RNTI) descrambling processing on the data processed by the decoding processing, and storing downlink control information obtained by correct descrambling processing into a backward-stage memory.

10. The method according to claim 8 or 9, wherein the sub-frame configuration parameter comprises at least one of the following: band width, a transmission mode, a frame structure type, total length of soft information, an RNTI value, a search starting location of a User Equipment (UE) specific space under each aggregation degree, type of to-be-detected downlink control information, and a search priority configuration parameter.

Fig. 1

```
┌─────────────────────────────────┐
│                                 │
│       Calculation unit 10       │
│                                 │
└─────────────────────────────────┘
                 │
                 │
┌─────────────────────────────────┐
│                                 │
│   A plurality of blind detection │
│   processing sub-channels 20    │
│                                 │
└─────────────────────────────────┘
```

Fig. 2

```
                    ( Start )
                        │
            ┌───────────────────────┐  S202
            │  obtaining a search   │
            │     space priority    │
            │      parameter        │
            └───────────────────────┘
                        │            S204
                   ╱─────────────╲
          Yes    ╱   whether it    ╲   No
       ┌────────<  is common space   >────────┐
       │         ╲  priority        ╱         │
       │          ╲  detection?    ╱          │
       │           ╲─────────────╱            │
       │                                      │
┌──────────────┐ S206              ┌──────────────┐ S212
│ common space │                   │ UE specific  │
│ DCI detection│                   │    space     │
│              │                   │ DCI detection│
└──────────────┘                   └──────────────┘
       │                                   │         S214
   ╱───────────╲ S208                 ╱───────────╲
  ╱  Whether    ╲     No      No     ╱   whether    ╲
 <  UE space     >─────┐    ┌───────< common space   >
  ╲ detection    ╱     │    │        ╲  detection    ╱
   ╲ is needed? ╱      │    │         ╲ is needed?  ╱
    ╲─────────╱        │    │          ╲───────────╱
       │ Yes           │    │               │ Yes
┌──────────────┐ S210  │    │        ┌──────────────┐ S216
│ UE specific  │       │    │        │ common space │
│    space     │       │    │        │ DCI detection│
│ DCI detection│       │    │        │              │
└──────────────┘       │    │        └──────────────┘
       │               │    │               │
       └────┬──────────┘    └───────┬───────┘
            │                       │
         ( End )                 ( End )
```

Fig. 3

```
                        ┌─────────┐
                        │  Start  │
                        └────┬────┘
                             │
                             ▼                    S302
                    ┌──────────────────┐
                    │ obtaining common │
                    │  space priority  │
                    │   parameters     │
                    └────────┬─────────┘
                             │
                             ▼                    S304
                          ╱──────╲         No
          Yes          ╱ whether L=4 is ╲
      ┌─────────────  │  prior to others │  ─────────────┐
      │               ╲                 ╱                │
      │                 ╲──────╱                         │
      ▼              S306                                ▼        S312
┌──────────────────┐                         ┌──────────────────┐
│ common space DCI │                         │ common space DCI │
│ detection under  │                         │ detection under  │
│   the aggrega-   │                         │   the aggrega-   │
│  tion degree L=4 │                         │  tion degree L=8 │
└────────┬─────────┘                         └────────┬─────────┘
         │                                            │
         ▼          S308                              ▼          S314
      ╱──────╲                                     ╱──────╲
    ╱ whether  ╲        No            No         ╱ whether  ╲
   │ detection is│ ──────────┐    ┌──────────── │ detection is│
   │ needed when │           │    │             │ needed when │
    ╲  L=8      ╱            │    │              ╲  L=4      ╱
      ╲──────╱               │    │                ╲──────╱
         │ Yes               │    │                   │ Yes       S316
         ▼          S310     │    │                   ▼
┌──────────────────┐         │    │         ┌──────────────────┐
│ common space DCI │         │    │         │ common space DCI │
│ detection under  │         │    │         │ detection under  │
│   the aggrega-   │         │    │         │   the aggrega-   │
│  tion degree L=8 │         │    │         │  tion degree L=4 │
└────────┬─────────┘         │    │         └────────┬─────────┘
         │◄──────────────────┘    └──────────────────►│
         ▼                                            ▼
    ┌─────────┐                                  ┌─────────┐
    │   End   │                                  │   End   │
    └─────────┘                                  └─────────┘
```

Fig. 4

```
                    ┌──────────────┐
                    │    Start     │
                    └──────────────┘
                           │
                           ▼
        ┌────────────────────────────────────────┐  S402
        │   obtaining UE specific space priority  │
        │              parameters                 │
        └────────────────────────────────────────┘
                           │
                           ▼
        ┌────────────────────────────────────────┐  S404
        │ DCI detection under the aggregation degree │
        │     corresponding to the top priority   │
        └────────────────────────────────────────┘
                           │
                           ▼
        ┌────────────────────────────────────────┐  S406
        │ DCI detection under the aggregation degree │
        │   corresponding to the second priority  │
        └────────────────────────────────────────┘
                           │
                           ▼
        ┌────────────────────────────────────────┐  S408
        │ DCI detection under the aggregation degree │
        │   corresponding to the lowest priority  │
        └────────────────────────────────────────┘
                           │
                           ▼
                    ┌──────────────┐
                    │     End      │
                    └──────────────┘
```

Fig. 5

```
                    ┌──────────┐
                    │  Start   │
                    └────┬─────┘
                         │                              ┌──────────────┐
                         ▼                              │              │
   ┌──────────────────────────────┐  ╭─ S502            │
   │ calculating the starting address │                 │
   │ in RAM of the search space of │                    │
   │ each sub-channel according to │                    │
   │      a CCE starting location  │                    │
   └───────────────┬──────────────┘                     │
                   │                    ╭─ S504          │
                   ▼                                     │
   ┌──────────────────────────────┐                     │
   │ reading a certain length of soft │                 │
   │ information data according to │                     │
   │  the current aggregation degree │       ╭─ S514     │
   └───────────────┬──────────────┘                     │
                   │                    ┌────────────────┴──────┐
                   ▼        ╭─ S506      │ DCI detection under   │
           ◇──────────────◇             │ the aggregation       │
          ╱ whether the rate de- ╲  No   │ degree corresponding  │
          ╲ matching is completed? ╱─────│ to next priority      │
           ◇──────────────◇             └───────────┬───────────┘
                   │ Yes                             │ No
                   ▼        ╭─ S508                   │    ╭─ S512
           ◇──────────────◇          Yes    ◇────────┴───────◇
          ╱   Does the     ╲────────────────╱   Are all       ╲
          ╲ searching times reach the ╱      ╲ the aggregation degrees ╱
          ╱  candidate set  ╲                 ╲   detected?    ╱
          ╲    number?      ╱                  ◇───────┬───────◇
           ◇──────────────◇                            │ Yes
                   │ No                                ▼
                   ▼        ╭─ S510               ┌──────────┐
   ┌──────────────────────────────┐              │   End    │
   │ calculating the starting location in │      └──────────┘
   │ RAM of soft information of next │
   │ candidate set of each blind │
   │ detection processing sub-channel │
   └──────────────────────────────┘
```

Fig. 6

Fig. 7

```
                    ┌──────────┐
                    │  Start   │
                    └────┬─────┘
                         │
                         ▼
              ┌──────────────────────┐   S702
              │ performing local CRC │
              │   on decoded data    │
              └──────────┬───────────┘
                         │
                         ▼
              ┌──────────────────────┐   S704
              │  judging the current │
              │ DCI type according to│
              │   input parameters   │
              └──────────┬───────────┘
                         │
                         ▼ ◄──────────────────────────────────┐
              ┌──────────────────────┐   S706                 │
              │     performing       │                        │
              │ descrambling using   │                        │
              │ possible RNTI values │                        │
              └──────────┬───────────┘                        │
                         │                        No          │
                         ▼                     ┌──────────── S710
                  ╱───────────╲  S708          ╱───────────────╲
                 ╱   whether   ╲     No        ╱ Are all RNTIs   ╲
                ╱ descrambling  ╲─────────────▶╲    finished     ╱
                ╲ is correct?   ╱              ╲ descrambling?   ╱
                 ╲─────────────╱                ╲───────────────╱
                       │ Yes                            │ Yes
                       ▼                                ▼
              ┌──────────────────┐  S712          ┌──────────┐
              │ storing the      │                │   End    │
              │ detected         │                └──────────┘
              │ DCI information  │
              └────────┬─────────┘
                       ▼
                 ┌──────────┐
                 │   End    │
                 └──────────┘
```

Fig. 8

```
        ┌─────────────────┐
        │      Start       │
        └─────────────────┘
                 │
                 ▼
┌──────────────────────────────────────────┐
│  the address in a memory of soft          │  S802
│  information data required by processing   │
│  which is carried out by a plurality of    │
│  blind detection processing sub-channels   │
│  is calculated respectively according to   │
│  a preconfigured sub-frame configuration   │
│  parameter                                 │
└──────────────────────────────────────────┘
                 │
                 ▼
┌──────────────────────────────────────────┐
│  the plurality of blind detection          │  S804
│  processing sub-channels perform blind     │
│  detection processing in parallel          │
│  according to a calculation result         │
└──────────────────────────────────────────┘
                 │
                 ▼
        ┌─────────────────┐
        │       End        │
        └─────────────────┘
```

Fig. 9

# INTERNATIONAL SEARCH REPORT

| International application No. |
| --- |
| PCT/CN2010/072839 |

## A. CLASSIFICATION OF SUBJECT MATTER

H04W 24/02 (2009.01) i

According to International Patent Classification (IPC) or to both national classification and IPC

## B. FIELDS SEARCHED

Minimum documentation searched (classification system followed by classification symbols)

IPC: H04L; G06F; H04W

Documentation searched other than minimum documentation to the extent that such documents are included in the fields searched

Electronic data base consulted during the international search (name of data base and, where practicable, search terms used)

CPRSABS, CNKI, WPI, EPODOC: blind, detect+, configur+, DCI, downlink w control w information, address, priority, storage, parameter, converging degree, start, position

## C. DOCUMENTS CONSIDERED TO BE RELEVANT

| Category* | Citation of document, with indication, where appropriate, of the relevant passages | Relevant to claim No. |
| --- | --- | --- |
| A | CN 101389106 A (ZTE CORP)<br>18 Mar. 2009 (18.03.2009) the whole document | 1-10 |
| A | CN 101505498 A (ZTE CORP)<br>12 Aug. 2009 (12.08.2009) the whole document | 1-10 |
| A | US 2009312008 A1 (TELEFONAKTIEBOLAGET ERICSSON L M)<br>17 Dec. 2009 (17.12.2009) the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 28 Dec. 2010 (28.12.2010) | **06 Jan. 2011 (06.01.2011)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>LI, Junjie<br><br>Telephone No. (86-10)62411279 |
| --- | --- |

Form PCT/ISA /210 (second sheet) (July 2009)

## INTERNATIONAL SEARCH REPORT
Information on patent family members

| | International application No. |
|---|---|
| | PCT/CN2010/072839 |

| Patent Documents referred in the Report | Publication Date | Patent Family | Publication Date |
|---|---|---|---|
| CN101389106A | 18.03.2009 | None | |
| CN101505498A | 12.08.2009 | None | |
| US2009312008A1 | 17.12.2009 | WO2009095369A1 | 06.08.2009 |
| | | AU2009209693A1 | 06.08.2009 |
| | | CA2711577A1 | 06.08.2009 |

Form PCT/ISA /210 (patent family annex) (July 2009)